# EUROPÄISCHE PATENTSCHRIFT

(11) **EP 3 639 353 B1**
(45) Veröffentlichungstag und Bekanntmachung des Hinweises auf die Patenterteilung: **30.08.2023**
(21) Anmeldenummer: 17749161.0
(22) Anmeldetag: 28.07.2017
(51) Int. Cl.: H02M 1/32, H02H 9/08, H02J 3/36, H02M 7/483, H02H 7/122, H02M 7/757

(54) **IMPEDANZ FÜR AC FEHLERSTROMBEHANDLUNG IN EINEM HGÜ-UMRICHTER**
IMPEDANCE FOR AC FAULT CURRENT HANDLING FOR HVDC CONVERTER
IMPÉDANCE POUR CONTROLER DES COURANTS DE DÉFAUT DANS UN CONVERTISSEUR C.C.H.T.

(43) Veröffentlichungstag der Anmeldung: 22.04.2020
(73) Patentinhaber: Siemens Energy Global GmbH & Co. KG, 81739 München (DE)
(72) Erfinder: BALKENOHL, Michael, 91052 Erlangen (DE); BURKHARDT, Matthias, 91052 Erlangen (DE); PRIETO GOMEZ, Juan Fernando, 90408 Nürnberg (DE)
(86) Internationale Anmeldenummer: PCT/EP2017/069172
(87) Internationale Veröffentlichungsnummer: WO 2019/020195

(56) Entgegenhaltungen:
- EP-A1- 1 151 324
- EP-B1- 1 151 324
- WO-A1-2009/149744
- CN-A- 104 578 130
- CN-B- 103 066 582
- CN-U- 206 790 085
- GB-A- 2 397 445
- SCHETTLER F ET AL: "HVDC transmission systems using voltage sourced converters design and applications", POWER ENGINEERING SOCIETY SUMMER MEETING, 2000. IEEE 16 - 20 JULY 2000, PISCATAWAY, NJ, USA,IEEE, PISCATAWAY, NJ, USA, Bd. 2, 16. Juli 2000 (2000-07-16), Seiten 715-720, XP010510729, DOI: 10.1109/PESS.2000.867439 ISBN: 978-0-7803-6420-2
- XUE YINGLIN ET AL: "On the Bipolar MMC-HVDC Topology Suitable for Bulk Power Overhead Line Transmission: Configuration, Control, and DC Fault Analysis", IEEE TRANSACTIONS ON POWER DELIVERY, IEEE SERVICE CENTER, NEW YORK, NY, US, Bd. 29, Nr. 6, 1. Dezember 2014 (2014-12-01), Seiten 2420-2429, XP011564727, ISSN: 0885-8977, DOI: 10.1109/TPWRD.2014.2352313 [gefunden am 2014-11-18]
- BUCHER MATTHIAS K ET AL: "Comparison of fault currents in multiterminal HVDC grids with different grounding schemes", 2014 IEEE PES GENERAL MEETING | CONFERENCE & EXPOSITION, IEEE, 27 July 2014 (2014-07-27), pages 1-5, XP032670771, DOI: 10.1109/PESGM.2014.6938990 [retrieved on 2014-10-29]

## Beschreibung

Die Erfindung betrifft eine Stromrichtereinheit für eine Hochspannungsgleichstromübertragung. Diese Stromrichtereinheit weist mindestens einen Stromrichter auf.

An Stromrichtern auftretende Fehler können dadurch geklärt werden, dass ein Wechselstrom-Leistungsschalter (welcher einen Wechselspannungsanschluss des Stromrichters mit einem Wechselspannungssystem verbindet) geöffnet wird. Diese Fehlerklärung (Fehlerbehandlung) mittels eines Wechselstrom-Leistungsschalters ist insbesondere auch bei modularen Multilevel-Stromrichtern mit Halbbrücken-Modulen anwendbar.

Problematisch ist dabei allerdings das Auftreten von sogenannten unsymmetrischen Fehlern (insbesondere stromrichterintern). Das sind Fehler, die lediglich einen Pol oder zwei Pole der dreipoligen (dreiphasigen) Wechselspannung betreffen. Besonders problematisch ist es, wenn der Wechselstrom-Leistungsschalter mittels eines Transformators mit dem Wechselspannungsanschluss des Stromrichters verbunden ist, der unsymmetrische Fehler auf der Sekundärseite (also auf der dem Stromrichter zugewandten Seite) des Transformators auftritt und der Wechselstrom-Leistungsschalter auf der Primärseite des Transformators (also auf der vom Stromrichter abgewandten Seite des Transformators) angeordnet ist. Derartige unsymmetrische Fehler führen zu einer unsymmetrischen Strombelastung auf der Sekundärseite des Transformators, die auf die Primärseite des Transformators übertragen wird und dazu führt, dass der durch den Wechselstrom-Leistungsschalter fließende Wechselstrom keine Strom-Nulldurchgänge mehr aufweist (fehlende Nulldurchgänge des Wechselstroms). Diese fehlenden Nulldurchgänge des Wechselstroms verhindern nach einer Fehlererkennung ein schnelles Öffnen des Wechselstrom-Leistungsschalters, da beim Öffnen des Wechselstrom-Leistungsschalters auftretende Lichtbögen erst bei Nulldurchgängen des Wechselstroms sicher verlöschen.

Insbesondere bei modularen Multilevel-Stromrichtern mit Halbbrücken-Submodulen ist jedoch eine rasche Fehlerklärung erforderlich, da sonst die im Fehlerfall leitenden Freilaufdioden der Halbbrücken-Submodule thermisch überlastet werden können und neben dem Wechselstrom-Leistungsschalter auch der Stromrichter irreversible Schäden erleiden kann.

Zur Lösung dieses Problems wurde in der Patentanmeldung WO 2011/150963 A1 vorgeschlagen, eine Kurzschließereinheit zu verwenden, die im Falle eines unsymmetrischen Fehlers alle drei Phasen des Wechselspannungsnetzes gegen Erde kurzschließt. Dadurch wird der unsymmetrische Fehler in einen symmetrischen Fehler (das heißt, in einen Fehler, der alle drei Phasen betrifft) umgewandelt, wodurch Nulldurchgänge des Wechselstromes auf der Primärseite des Transformators auftreten.

Weiterhin wurde in der Patentanmeldung WO 2016/055106 A1 vorgeschlagen, im Falle eines unsymmetrischen Fehlers eine Tertiärwicklung des Transformators mittels einer Kurzschließereinheit kurzzuschließen. Dies erfolgt so, dass die drei Phasen der Tertiärwicklung untereinander kurzgeschlossen werden.

Bei den beiden vorstehend genannten Lösungen ist es notwendig, im Fehlerfall Kurzschließer-Schalter zu schließen. Bei der ersten genannten Lösung werden durch den entstehenden Kurzschluss das Wechselspannungsnetz und daran angeschlossene Komponenten stark belastet. Bei der zweiten genannten Lösung wird eine für hohe Leistungen ausgelegte Tertiärwicklung des Transformators benötigt, um die auf der Primärseite des Trafos fließenden Ströme schnell ausreichend beeinflussen zu können. Eine derartige Tertiärwicklung ist aufwendig und teuer.

Aus der Patentschrift CN 103 066 582 B ist ein modularer Multilevelstromrichter bekannt, bei dem die beiden Gleichspannungsanschlüsse jeweils mittels einer Schutzschaltung mit Erdpotential verbunden sind. Die Schutzschaltung weist dabei Widerstände, Kondensatoren, eine Funkenstrecke, einen Überspannungsableiter sowie zwei antiparallel geschaltete Thyristoren auf.

Die Offenlegungsschrift GB 2 397 445 A offenbart eine Stromrichterstation mit zwei in Reihe geschalteten Stromrichtern, bei denen der Verbindungspunkt zwischen den beiden Stromrichtern mittels einer Erdungsschaltung mit Erdpotential verbunden ist. Die Erdungsschaltung weist eine Induktivität oder einen Parallelschwingkreis aus mindestens einer Induktivität und einer Kapazität auf.

Die Schrift EP 1 151 324 A offenbart eine ähnliche Stromrichterstation, bei der der Verbindungspunkt zwischen den beiden Stromrichtern mit Erdpotential verbunden ist mittels einer Induktivität oder mittels eines Reihenschwingkreises, der eine Induktivität und eine Kapazität aufweist.

Aus dem Artikel "HVDC Transmission Systems using Voltage Sourced Converters - Design and Applications" von F. Schettler et al, Power Engineering Society Summer Meeting, IEEE, 16. Juli 2000, Seiten 715-720 ist eine Stromrichterstation für eine bipolare Hochspannungsgleichstromübertragung bekannt, bei der der Verbindungspunkt zwischen den beiden Stromrichtern mittels einer Impedanz und eines parallel geschalteten Überspannungsableiters mit Erdpotential verbunden ist.

Der Erfindung liegt die Aufgabe zugrunde, eine Stromrichtereinheit und ein Verfahren zur Fehlerbehandlung bei einer Stromrichtereinheit anzugeben, mit denen auch bei Auftreten eines unsymmetrischen Fehlers Stromnulldurchgänge erreicht werden können.

Diese Aufgabe wird erfindungsgemäß gelöst durch eine Stromrichtereinheit und durch ein Verfahren nach den unabhängigen Patentansprüchen. Vorteilhafte Ausführungsformen der Stromrichtereinheit und des Verfahrens sind in den abhängigen Patentansprüchen angegeben.

Offenbart wird eine Stromrichtereinheit für eine Hochspannungsgleichstromübertragung
- mit einem ersten Stromrichter,
- wobei ein erster Gleichspannungsanschluss des ersten Stromrichters mit einem ersten Leiteranschlusspunkt für einen ersten Hochspannungsgleichstromübertragungs-Leiter verbunden ist,
- wobei ein zweiter Gleichspannungsanschluss des ersten Stromrichters unter Ausbildung eines Verbindungspunktes mit einer eine elektrische Impedanz aufweisenden Impedanzeinheit verbunden ist, und
- die Impedanzeinheit den Verbindungspunkt mit Erdpotential verbindet.

Mit anderen Worten gesagt, ist der Verbindungspunkt mittels der Impedanzeinheit mit Erdpotential verbunden. Diese Stromrichtereinheit weist vorteilhafterweise die Impedanzeinheit auf, die den Verbindungspunkt mit dem Erdpotential verbindet. Die Impedanzeinheit weist eine von Null verschiedene Impedanz auf. Im Unterschied zu einer Stromrichtereinheit, bei der der Verbindungspunkt unmittelbar geerdet ist (das heißt, bei der der Verbindungpunkt mittels eines elektrischen Leiters nahezu impedanzlos mit Erdpotential verbunden ist) ist hier eine Impedanzeinheit zur Verbindung des Verbindungspunktes mit Erdpotential vorgesehen. Diese Impedanzeinheit dämpft bei Auftreten eines unsymmetrischen Fehlers den Fehlerstrom, der vom Erdpotential zu dem Verbindungspunkt fließt. Dadurch wird erreicht, dass die primärseitigen Wechselströme auch bei Auftreten eines unsymmetrischen Fehlers Stromnulldurchgänge aufweisen.

Die Stromrichtereinheit ist so ausgestaltet, dass der zweite Gleichspannungsanschluss des ersten Stromrichters mit einem ersten Gleichspannungsanschluss eines zweiten Stromrichters elektrisch verbunden ist, wobei ein zweiter Gleichspannungsanschluss des zweiten Stromrichters mit einem zweiten Leiteranschlusspunkt für einen zweiten Hochspannungsgleichstromübertragungs-Leiter verbunden ist.

Die Stromrichtereinheit weist also einen zweiten Stromrichter auf. Mittels einer solchen Stromrichtereinheit kann beispielsweise eine bipolare HGÜ-Anlage realisiert werden. Diese Stromrichtereinheit weist zwei Stromrichter auf, die beide mittels der Impedanzeinheit beeinflusst werden. Damit ergibt sich eine Stromrichtereinheit für eine Hochspannungsgleichstromübertragung
- mit einem ersten Stromrichter und einem zweiten Stromrichter,
- wobei ein erster Gleichspannungsanschluss des ersten Stromrichters mit einem ersten Leiteranschlusspunkt für einen ersten Hochspannungsgleichstromübertragungs-Leiter verbunden ist,
- wobei ein zweiter Gleichspannungsanschluss des ersten Stromrichters unter Ausbildung eines Verbindungspunktes mit einem ersten Gleichspannungsanschluss des zweiten Stromrichters elektrisch verbunden ist,
- wobei ein zweiter Gleichspannungsanschluss des zweiten Stromrichters mit einem zweiten Leiteranschlusspunkt für einen zweiten Hochspannungsgleichstromübertragungs-Leiter verbunden ist, und
- wobei der Verbindungspunkt mittels einer eine elektrische Impedanz aufweisenden Impedanzeinheit mit Erdpotential verbunden ist.

Die Stromrichtereinheit ist auch so ausgestaltet, dass die Impedanzeinheit ein (ohmsches) Widerstands-Bauelement aufweist. Vorteilhafterweise kann bereits mit einem einfachen ohmschen Widerstands-Bauelement ("Widerstand") erreicht werden, dass im Falle eines unsymmetrischen Fehlers die primärseitigen Wechselströme Nulldurchgänge aufweisen.

Die Stromrichtereinheit ist so ausgestaltet, dass das Widerstands-Bauelement einen ohmschen Widerstand zwischen 5 Ohm und 5000 Ohm aufweist. Es hat sich gezeigt, dass Stromnulldurchgänge im primärseitigen Wechselstrom schon mit relativ kleinen ohmschen Widerständen erreicht werden können, insbesondere mit ohmschen Widerständen größer 5 Ohm. Aber auch mit größeren Widerstandswerten von bis zu 5000 Ohm lässt sich der gewünschte Effekt vorteilhafterweise realisieren. Ein gut geeigneter Widerstandswert des Widerstandbauelements kann einfach durch Versuche ermittelt werden, indem bei einem Versuchsbetrieb der Stromrichtereinheit unterschiedliche Widerstandswerte gewählt werden und der primärseitige Wechselstrom daraufhin überwacht wird, ob (bei unsymmetrischen Fehlern) zuverlässig die gewünschten Stromnulldurchgänge auftreten.

Die Stromrichtereinheit ist so ausgestaltet, dass das Widerstands-Bauelement in Reihe mit einem Induktivitäts-Bauelement geschaltet ist. Durch das in Reihe geschaltete Induktivitäts-Bauelement werden die durch die Impedanzeinheit fließenden Fehlerströme verringert.

Die Stromrichtereinheit kann auch so ausgestaltet sein, dass der Verbindungspunkt zusätzlich mittels eines Überspannungsableiters mit Erdpotential verbunden ist. Mittels dieses Überspannungsableiters werden das Widerstands-Bauelement und ggf. das optionale Induktivitäts-Bauelement vorteilhafterweise vor Überspannung geschützt. Außerdem kann die bei der Impedanzeinheit auftretende Verlustleistung vorteilhafterweise aufgeteilt werden auf das Widerstands-Bauelement und auf den Überspannungsableiter.

Die Stromrichtereinheit kann so ausgestaltet sein, dass der Überspannungsableiter parallel zu der Impedanzeinheit geschaltet ist.

Die Stromrichtereinheit kann auch so ausgestaltet sein, dass der erste Stromrichter und/oder der zweite Stromrichter eine Reihenschaltung aus Modulen aufweisen, wobei die Module jeweils mindestens zwei elektronische Schaltelemente und einen elektrischen Energiespeicher aufweisen. Derartige Module können insbesondere als sogenannte Halbbrücken-Module ausgestaltet sein.

Die Stromrichtereinheit kann auch so ausgestaltet sein, dass der erste Stromrichter und/oder der zweite Stromrichter jeweils ein modularer Multilevel-Stromrichter ist. Insbesondere bei einem modularen Multilevel-Stromrichter mit Halbbrücken-Modulen kann die Impedanzeinheit mit Vorteil eingesetzt werden, um Stromnulldurchgänge im primärseitigen Wechselstrom durch den Wechselspannungsleistungsschalter sicherzustellen.

Offenbart wird weiterhin eine Hochspannungs-Gleichstrom-Übertragungsanlage mit einer Stromrichtereinheit nach einer der vorstehend beschriebenen Varianten.

Offenbart wird weiterhin ein Verfahren zur Fehlerbehandlung bei einer Stromrichtereinheit für eine Hochspannungsgleichstromübertragung
- wobei die Stromrichtereinheit einen ersten Stromrichter aufweist,
- wobei ein erster Gleichspannungsanschluss des ersten Stromrichters mit einem ersten Leiteranschlusspunkt für einen ersten Hochspannungsgleichstromübertragungs-Leiter verbunden ist,
- wobei ein zweiter Gleichspannungsanschluss des ersten Stromrichters unter Ausbildung eines Verbindungspunktes mit einer (eine elektrische Impedanz aufweisenden) Impedanzeinheit verbunden ist, und
- wobei die Impedanzeinheit den Verbindungspunkt mit Erdpotential verbindet,
- wobei ein Wechselspannungsanschluss des ersten Stromrichters mit einer Sekundärwicklung eines ersten Transformators verbunden ist, und eine Primärwicklung des ersten Transformators mit einem ersten Wechselstrom-Leistungsschalter verbunden ist, wobei bei dem Verfahren
- auf einen (unsymmetrischen, stromrichterinternen) Fehler am Wechselspannungsanschluss des ersten Stromrichters hin, insbesondere auf einen einpoligen oder zweipoligen Fehler am Wechselspannungsanschluss des ersten Stromrichters hin, ein Fehlerstrom vom Erdpotential durch die Impedanzeinheit zum Verbindungspunkt (und durch Freilaufpfade des ersten Stromrichters)zu fließen beginnt,
- aufgrund der Impedanz der Impedanzeinheit der Fehlerstrom gedämpft wird und an der Impedanzeinheit eine Spannung aufgebaut wird, wodurch ein die Primärwicklung des ersten Transformators durchfließender Wechselstrom (trotz des unsymmetrischen Fehlers) Nulldurchgänge aufweist, so dass dieser Wechselstrom mittels des ersten Wechselstrom-Leistungsschalters abschaltbar ist.

Das Verfahren kann auch so ablaufen, dass der zweite Gleichspannungsanschluss des ersten Stromrichters mit einem ersten Gleichspannungsanschluss eines zweiten Stromrichters elektrisch verbunden ist, wobei ein zweiter Gleichspannungsanschluss des zweiten Stromrichters mit einem zweiten Leiteranschlusspunkt für einen zweiten Hochspannungsgleichstromübertragungs-Leiter verbunden ist, wobei ein Wechselspannungsanschluss des zweiten Stromrichters mit einer Sekundärwicklung eines zweiten Transformators verbunden ist, und eine Primärwicklung des zweiten Transformators mit einem zweiten Wechselstrom-Leistungsschalter verbunden ist, wobei bei dem Verfahren auf einen (unsymmetrischen, stromrichterinternen) Fehler am Wechselspannungsanschluss des ersten Stromrichters oder am Wechselspannungsanschluss des zweiten Stromrichters hin, insbesondere auf einen einpoligen oder zweipoligen Fehler am Wechselspannungsanschluss des ersten Stromrichters oder am Wechselspannungsanschluss des zweiten Stromrichters hin, der
Fehlerstrom vom Erdpotential durch die Impedanzeinheit zum Verbindungspunkt (und durch die Freilaufpfade des ersten Stromrichters) zu fließen beginnt,
- aufgrund der Impedanz der Impedanzeinheit der Fehlerstrom gedämpft wird und an der Impedanzeinheit eine Spannung aufgebaut wird, wodurch ein die Primärwicklung des ersten Transformators durchfließender Wechselstrom oder ein die Primärwicklung des zweiten Transformators durchfließender Wechselstrom (trotz des unsymmetrischen Fehlers) Nulldurchgänge aufweist, so dass dieser Wechselstrom mittels des ersten Wechselstrom-Leistungsschalters oder mittels des zweiten Wechselstrom-Leistungsschalters abschaltbar ist.

Das Verfahren weist gleichartige Vorteile auf, wie sie oben in Zusammenhang mit der Stromrichtereinheit dargestellt sind.

Im Folgenden wird die Erfindung anhand von Ausführungsbeispielen näher erläutert. Gleiche Bezugszeichen verweisen dabei auf gleiche oder gleich wirkende Elemente. Dazu ist in
- Figur 1: ein Ausführungsbeispiel eines Stromrichters, der eine Vielzahl von Modulen aufweist, in
- Figur 2: ein Ausführungsbeispiel eines Moduls des Stromrichters, in
- Figur 3: ein Ausführungsbeispiel einer Hochspannungs-Gleichstrom-Übertragungsanlage mit zwei Stromrichtereinheiten, und in
- Figur 4: ein weiteres Ausführungsbeispiel einer Hochspannungs-Gleichstrom-Übertragungsanlage mit zwei Stromrichtereinheiten
dargestellt.

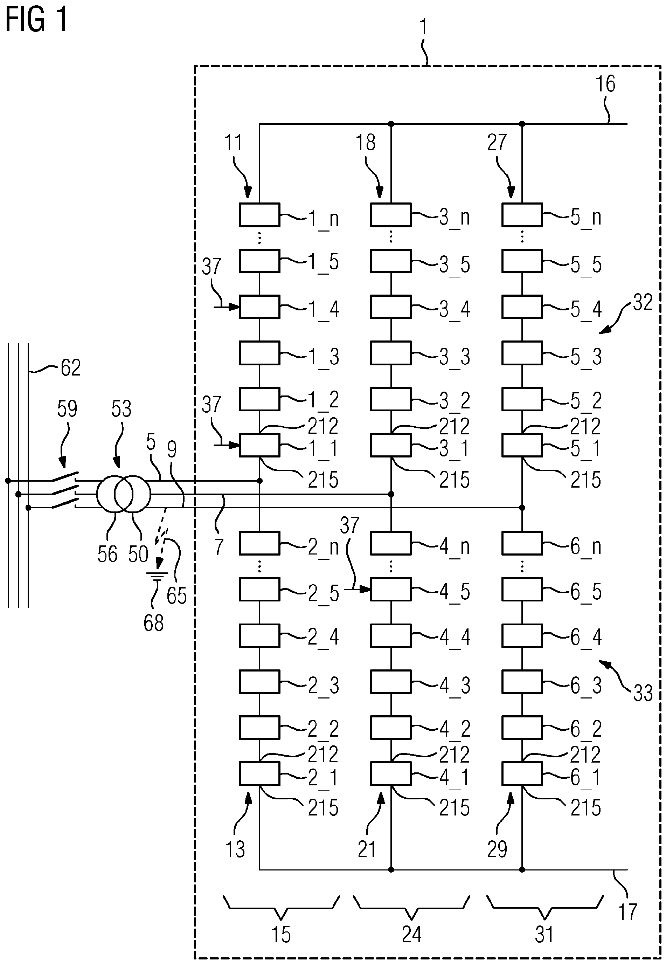

In Figur 1 ist ein Stromrichter 1 in Form eines modularen Multilevel-Stromrichters 1 (modular multilevel converter, MMC) dargestellt. Dieser Multilevel-Stromrichter 1 weist einen ersten Wechselspannungsanschluß 5, einen zweiten Wechselspannungsanschluß 7 und einen dritten Wechselspannungsanschluß 9 auf. Der erste Wechselspannungsanschluß 5 ist elektrisch mit einem ersten Phasenmodulzweig 11 und einem zweiten Phasenmodulzweig 13 verbunden. Der erste Phasenmodulzweig 11 und der zweite Phasenmodulzweig 13 bilden ein erstes Phasenmodul 15 des Stromrichters 1. Das dem ersten Wechselspannungsanschluss 5 abgewandte Ende des ersten Phasenmodulzweigs 11 ist mit einem ersten Gleichspannungsanschluß 16 elektrisch verbunden; das dem ersten Wechselspannungsanschluß 5 abgewandte Ende des zweiten Phasenmodulzweigs 13 ist mit einem zweiten Gleichspannungsanschluß 17 elektrisch verbunden.

Der zweite Wechselspannungsanschluss 7 ist mit einem Ende eines dritten Phasenmodulzweigs 18 und mit einem Ende eines vierten Phasenmodulzweigs 21 elektrisch verbunden. Der dritte Phasenmodulzweig 18 und der vierte Phasenmodulzweig 21 bilden ein zweites Phasenmodul 24. Der dritte Wechselspannungsanschluß 9 ist mit einem Ende eines fünften Phasenmodulzweigs 27 und mit einem Ende eines sechsten Phasenmodulzweigs 29 elektrisch verbunden. Der fünfte Phasenmodulzweig 27 und der sechste Phasenmodulzweig 29 bilden ein drittes Phasenmodul 31.

Das dem zweiten Wechselspannungsanschluss 7 abgewandte Ende des dritten Phasenmodulzweigs 18 und das dem dritten Wechselspannungsanschluß 9 abgewandte Ende des fünften Phasenmodulzweigs 27 sind mit dem ersten Gleichspannungsanschluß 16 elektrisch verbunden. Das dem zweiten Wechselspannungsanschluss 7 abgewandte Ende des vierten Phasenmodulzweigs 21 und das dem dritten Wechselspannungsanschluß 9 abgewandte Ende des sechsten Phasenmodulzweigs 29 sind mit dem zweiten Gleichspannungsanschluss 17 elektrisch verbunden. Der erste Phasenmodulzweig 11, der dritte Phasenmodulzweig 18 und der fünfte Phasenmodulzweig 27 bilden ein Stromrichterteil 32; der zweite Phasenmodulzweig 13, der vierte Phasenmodulzweig 21 und der sechste Phasenmodulzweig 29 bilden ein Stromrichterteil 33.

Jeder Phasenmodulzweig weist eine Mehrzahl von Modulen (1_1, 1_2, 1_3, 1_4 ... 1_n; 2_1 ... 2_n; usw.) auf, welche (mittels ihrer galvanischen Stromanschlüsse) elektrisch in Reihe geschaltet sind. Solche Module werden auch als Submodule bezeichnet. Im Ausführungsbeispiel der Figur 1 weist jeder Phasenmodulzweig n Module auf. Die Anzahl der mittels ihrer galvanischen Stromanschlüsse elektrisch in Reihe geschalteten Module kann sehr verschieden sein, mindestens sind drei Module in Reihe geschaltet, es können aber auch beispielsweise 50, 100 oder mehr Module elektrisch in Reihe geschaltet sein. Im Ausführungsbeispiel ist n = 36: der erste Phasenmodulzweig 11 weist also 36 Module 1_1, 1_2, 1_3, ... 1_36 auf. Die anderen Phasenmodulzweige 13, 18, 21, 27 und 29 sind gleichartig aufgebaut.

Die Module 1_1 bis 6_n werden von einer nicht dargestellten Steuereinrichtung angesteuert. Von dieser zentralen Steuereinrichtung werden optische Nachrichten bzw. optische Signale über eine optische Kommunikationsverbindung 37 (zum Beispiel über einen Lichtwellenleiter) zu den einzelnen Modulen übertragen. Die Nachrichtenübertragung zwischen der Steuereinrichtung und einem Modul ist jeweils symbolhaft durch einen Pfeil 37 dargestellt; die Richtung der Nachrichtenübertragung ist durch die Pfeilspitze symbolisiert. Dies ist am Beispiel der Module 1_1, 1_4 und 4_5 dargestellt; zu den anderen Modulen werden auf die gleiche Art und Weise Nachrichten gesendet. Beispielsweise sendet die Steuereinrichtung an die einzelnen Module jeweils einen Sollwert zur Höhe der Ausgangsspannung, die das jeweilige Modul bereitstellen soll.

Der erste Wechselspannungsanschluss 5, der zweite Wechselspannungsanschluss 7 und der dritte Wechselspannungsanschluss 9 sind mit Sekundärwicklungen 50 eines dreiphasigen Transformators 53 elektrisch verbunden. Primärwicklungen 56 des Transformators 53 sind über einen dreipoligen Wechselstrom-Leistungsschalter 59 mit einem Wechselspannungssystem 62 elektrisch verbunden. Bei dem Wechselspannungssystem 62 kann es sich beispielsweise um ein Wechselspannungsnetz 62 (insbesondere um ein Wechselspannungs-Energieversorgungsnetz) handeln. Die Sekundärwicklungen 50 und die Primärwicklungen 56 können dabei jeweils beliebig verschaltet sein, beispielsweise in Sternschaltung oder in Dreieckschaltung.

Beispielhaft ist in Figur 1 ein einpoliger (einphasiger) Fehler 65 dargestellt, der an dem dritten Wechselspannungsanschluss 9 des Stromrichters 1 auftritt. Dabei handelt es sich im Ausführungsbeispiel um einen Erdschluss 65 der dem dritten Wechselspannungsanschluss 9 zugeordneten Phase der Wechselspannung. Ein derartiger von einer Phase der Wechselspannung des Stromrichters 1 zu Erdpotential 68 auftretender Fehler führt zu einer unsymmetrischen Strombelastung auf der Sekundärseite (also der dem Stromrichter 1 zugewandten Seite) des Transformators, die auf die Primärseite (also zu der dem Stromrichter 1 abgewandten Seite) des Transformators übertragen wird und dazu führt, dass der durch den Wechselstrom-Leistungsschalter 59 fließende Wechselstrom keine Strom-Nulldurchgänge mehr aufweist. Derartige "fehlende Strom-Nulldurchgänge" des durch den Wechselstrom-Leistungsschalter 59 fließenden Wechselstroms beeinträchtigen (nach Erkennung des Fehlers 65) das schnelle Öffnen des Wechselstrom-Leistungsschalters. Die Ursache dafür ist, dass bei fehlenden Nulldurchgängen des Stroms ein Lichtbogen (der beim Öffnen der mechanischen Kontakte des Wechselstrom-Leistungsschalters 59 entsteht) nicht zuverlässig gelöscht wird. Daher ist es wünschenswert, dass der durch den Wechselstrom-Leistungsschalter 59 fließende Strom auch im Falle eines unsymmetrischen Fehlers 65 weiterhin Strom-Nulldurchgänge aufweist. Dies wird durch eine Impedanzeinheit erreicht, wie weiter unten erläutert wird.

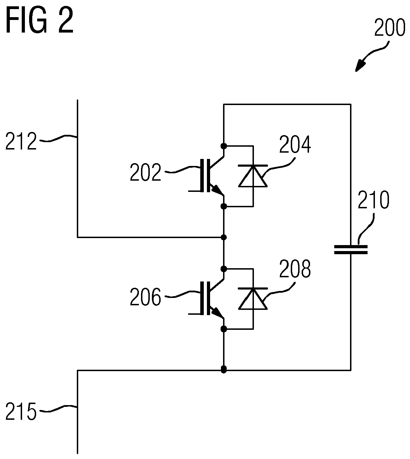

In Figur 2 ist ein Ausführungsbeispiel eines Moduls 200 des Stromrichters 1 dargestellt. Dabei kann es sich beispielsweise um eines der in Figur 1 dargestellten Module 1_1 ... 6_n handeln.

Das Modul 200 ist als ein Halbbrücken-Modul 200 ausgestaltet. Das Modul 200 weist ein erstes (abschaltbares) elektronisches Schaltelement 202 (erstes abschaltbares Halbleiterventil 202) mit einer ersten antiparallel geschalteten Diode 204 auf. Weiterhin weist das Modul 200 ein zweites (abschaltbares) elektronisches Schaltelement 206 (zweites abschaltbares Halbleiterventil 206) mit einer zweiten antiparallel geschalteten Diode 208 sowie einen elektrischen Energiespeicher 210 in Form eines Kondensators 210 auf. Das erste elektronische Schaltelement 202 und das zweite elektronische Schaltelement 206 sind jeweils als ein IGBT (insulated-gate bipolar transistor) ausgestaltet. Das erste elektronische Schaltelement 202 ist elektrisch in Reihe geschaltet mit dem zweiten elektronischen Schaltelement 206. Am Verbindungspunkt zwischen den beiden elektronischen Schaltelementen 202 und 206 ist ein erster galvanischer Modulanschluss 212 angeordnet. An dem Anschluss des zweiten elektronischen Schaltelements 206, welcher dem Verbindungspunkt gegenüberliegt, ist ein zweiter galvanischer Modulanschluss 215 angeordnet. Der zweite Modulanschluss 215 ist weiterhin mit einem ersten Anschluss des Energiespeichers 210 elektrisch verbunden; ein zweiter Anschluss des Energiespeichers 210 ist elektrisch verbunden mit dem Anschluss des ersten elektronischen Schaltelements 202, der dem Verbindungspunkt gegenüberliegt.

Der Energiespeicher 210 ist also elektrisch parallel geschaltet zu der Reihenschaltung aus dem ersten elektronischen Schaltelement 202 und dem zweiten elektronischen Schaltelement 206. Durch entsprechende Ansteuerung des ersten elektronischen Schaltelements 202 und des zweiten elektronischen Schaltelements 206 durch eine (nicht dargestellte) elektronische Steuereinrichtung des Stromrichters kann erreicht werden, dass zwischen dem ersten Modulanschluss 212 und dem zweiten Modulanschluss 215 entweder die Spannung des Energiespeichers 210 ausgegeben wird oder keine Spannung ausgegeben wird (d.h. eine Nullspannung ausgegeben wird). Durch Zusammenwirken der Module der einzelnen Phasenmodulzweige kann so die jeweils gewünschte Ausgangsspannung des Stromrichters erzeugt werden.

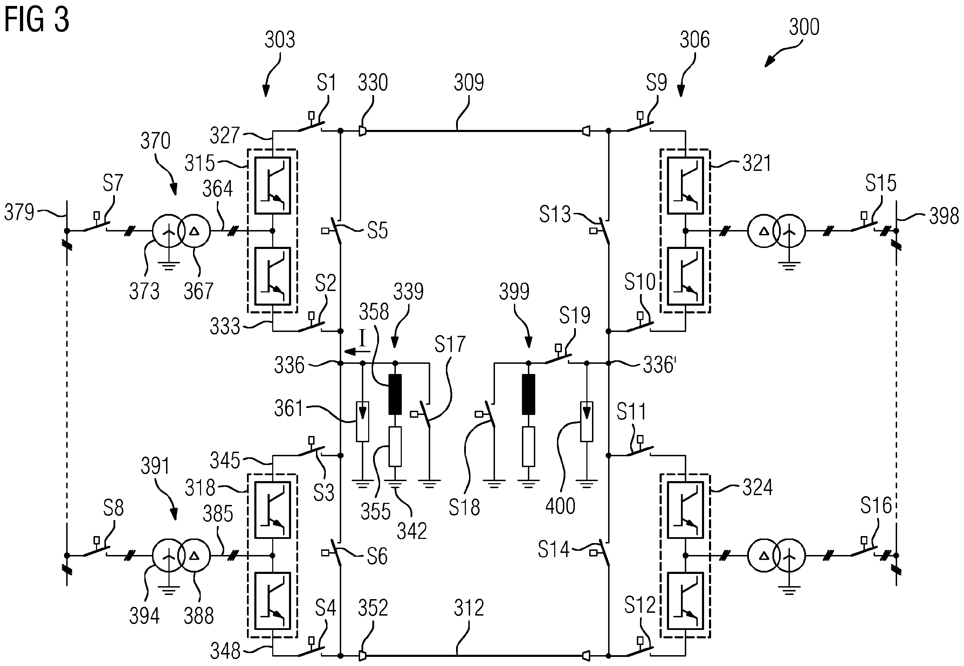

In Figur 3 ist ein Ausführungsbeispiel einer Hochspannungs-Gleichstrom-Übertragungsanlage 300 (HGÜ-Anlage 300) dargestellt. Diese HGÜ-Anlage weist eine erste Stromrichtereinheit 303 und eine zweite Stromrichtereinheit 306 auf. Die erste Stromrichtereinheit 303 und eine zweite Stromrichtereinheit 306 sind mittels eines ersten Hochspannungsgleichstromübertragungs-Leiters 309 (HGÜ-Leiters 309) und mittels eines zweiten HGÜ-Leiters 312 elektrisch miteinander verbunden. Die erste Stromrichtereinheit 303 bildet eine erste Stromrichterstation 303 der HGÜ-Anlage 300; die zweite Stromrichtereinheit 306 bildet eine zweite Stromrichterstation 306 der HGÜ-Anlage 300.

Die erste Stromrichtereinheit 303 weist einen ersten Stromrichter 315 und einen zweiten Stromrichter 318 auf. Die zweite Stromrichtereinheit 306 weist einen ersten Stromrichter 321 und einen zweiten Stromrichter 324 auf. Ein erster Gleichspannungsanschluss 327 des ersten Stromrichters 315 ist mit einem ersten Leiteranschlusspunkt 330 für den ersten Hochspannungsgleichstromübertragung-Leiter 309 elektrisch verbunden. Ein zweiter Gleichspannungsanschluss 333 des ersten Stromrichters 315 ist unter Ausbildung eines Verbindungspunktes 336 mit einer Impedanzeinheit 339 elektrisch verbunden. Die Impedanzeinheit 339 weist eine elektrische Impedanz ungleich Null auf. Die Impedanzeinheit 339 verbindet den Verbindungspunkt 336 mit Erdpotential 342. Mit anderen Worten gesagt ist der Verbindungspunkt 336 mittels der Impedanzeinheit 339 mit Erdpotential 342 elektrisch verbunden. Der Verbindungspunkt 336 ist elektrisch mit einem ersten Gleichspannungsanschluss 345 des zweiten Stromrichters 318 verbunden. Ein zweiter Gleichspannungsanschluss 348 des zweiten Stromrichters 318 ist mit einem zweiten Leiteranschlusspunkt 352 für den zweiten Hochspannungsgleichstromübertragung-Leiter 312 elektrisch verbunden.

In der HGÜ-Anlage 300 sind elektrische Schalter S1 bis S19 angeordnet. Mit diesen Schaltern S1 bis S19 können verschiedene Anlagenteile bedarfsweise elektrisch abgetrennt oder überbrückt werden. Mittels dieser Schalter kann also die HGÜ-Anlage 300 konfiguriert werden, indem zum Beispiel einzelne Stromrichter überbrückt werden oder indem einzelne Stromrichter vom Rest der Anlage abgetrennt werden. Der Schalter S7 ist ein erster Wechselstrom-Leistungsschalter S7; der Schalter S8 ist ein zweiter Wechselstrom-Leistungsschalter S8. Der Schalter S15 ist ein dritter Wechselstrom-Leistungsschalter S15 und der Schalter S16 ist ein vierter Wechselstrom-Leistungsschalter S16. Die übrigen Schalter S1-S6, S9-S14 und S17-S19 sind optionale Schalter, d.h. im Allgemeinen funktioniert die HGÜ-Anlage 300 auch ohne diese optionalen Schalter.

Die Impedanzeinheit 339 weist ein erstes (ohmsches) Widerstands-Bauelement 355 auf. Ein Induktivitäts-Bauelement 358 ist in Reihe zu dem Widerstands-Bauelement 355 geschaltet. Parallel zu dem Widerstands-Bauelement 355 bzw. parallel zu der Reihenschaltung von Widerstands-Bauelement 355 und Induktivitätsbauelement 358 ist optional ein Überspannungsableiter 361 geschaltet. Der Verbindungspunkt 336 kann also auch zusätzlich mittels des Überspannungsableiters 361 mit Erdpotential 342 verbunden sein. Der Überspannungsableiter 361 ist parallel zu der Impedanzeinheit 339 geschaltet. Es ist ausreichend, wenn der Verbindungspunkt 336 mittels des Widerstands-Bauelement 355 und des Induktivitäts-Bauelement 358 mit Erdpotential 342 verbunden ist. Die anderen Elemente (Überspannungsableiter 361, Schalter S17) sind optional und können in anderen Ausführungsbeispielen auch weggelassen werden.

Das Widerstands-Bauelement 355 weist einen ohmschen Widerstand zwischen 5 Ohm und 5000 Ohm auf. Das Widerstands-Bauelement 355 weist also einen von Null verschiedenen ohmschen Widerstand auf; die Impedanzeinheit weist eine von Null verschiedene Impedanz auf. Es hat sich herausgestellt, dass schon kleine ohmsche Widerstände, wie beispielsweise 5 Ohm, ausreichend sein können, um Strom-Nulldurchgänge in dem, den Leistungsschalter durchfließenden, Wechselstrom sicherzustellen. Das Widerstands-Bauelement 355 muss aber natürlich an die jeweiligen technischen Gegebenheiten angepasst sein. Der Fachmann kann mit einer einfachen Versuchsreihe einen gut geeigneten Widerstandswert des Widerstands-Bauelements ermitteln, indem er bei verschiedenen Widerstandswerten versuchsweise einen unsymmetrischen Fehler erzeugt und den primärseitigen Wechselstrom auf das Vorliegen von Strom-Nulldurchgängen hin untersucht. Wenn nach einem simulierten unsymmetrischen Fehler Strom-Nulldurchgänge des Wechselstroms vorliegen, dann ist der jeweilige Widerstandswert geeignet.

Ein Wechselspannungsanschluss 364 des ersten Stromrichters 315 ist mit Sekundärwicklungen 367 eines dreiphasigen Transformators 370 elektrisch verbunden. Primärwicklungen 373 des Transformators 370 sind über den dreiphasigen Wechselstrom-Leistungsschalter S7 mit einem ersten Wechselspannungssystem 379 (insbesondere mit einem Wechselspannungsnetz 379) elektrisch verbunden.

In gleicher Art und Weise ist ein Wechselspannungsanschluss 385 des zweiten Stromrichters 318 elektrisch mit Sekundärwicklungen 388 eines zweiten Transformators 391 verbunden. Primärwicklungen 394 des zweiten Transformators 391 sind über einen zweiten Wechselstrom-Leistungsschalter S8 mit dem Wechselspannungssystem 379 verbunden.

Für den durch den Wechselstrom-Leistungsschalter S7 fließenden Wechselstrom wird durch die Impedanzeinheit 339 sichergestellt, dass auch im Falle eines unsymmetrischen Fehlers Strom-Nulldurchgänge vorhanden sind. Der durch diesen Wechselstrom-Leistungsschalter S7 fließende Wechselstrom bildet also den Strom, der auf der Primärseite des ersten Transformators 370 fließt. Im Normalbetrieb ist der Wechselstrom-Leistungsschalter S7 geschlossen, so dass der Betriebsstrom des Stromrichters durch den Wechselstrom-Leistungsschalter S7 fließt. Bei Erkennen eines Fehlers, insbesondere bei Erkennen eines unsymmetrischen Fehlers, wird der Wechselstrom-Leistungsschalter S7 geöffnet. Dies trifft sinngemäß auch auf den zweiten Wechselstrom-Leistungsschalter S8 zu. Auch für den durch den zweiten Wechselstrom-Leistungsschalter S8 fließenden Wechselstrom wird durch die Impedanzeinheit 339 sichergestellt, dass im Falle eines unsymmetrischen Fehlers Strom-Nulldurchgänge vorhanden sind.

Die zweite Stromrichtereinheit 306 ist gleichartig zu der ersten Stromrichtereinheit 303 aufgebaut. Der erste Stromrichter 321 und der zweite Stromrichter 324 der zweiten Stromrichtereinheit 306 sind unter Ausbildung eines zweiten Verbindungspunktes 336' elektrisch in Reihe geschaltet. Ebenso ist die zweite Stromrichtereinheit 306 gleichartig über Transformatoren und Wechselstrom-Leistungsschalter mit einem zweiten Wechselspannungssystem 398 (insbesondere mit einem zweiten Wechselspannungsnetz 398) verbunden. Die zweite Stromrichtereinheit 306 kann optional ebenfalls eine zweite Impedanzeinheit 399 mit einem parallel geschalteten zweiten Überspannungsableiter 400 aufweisen. Mittels des Schalters S19 kann die Impedanzeinheit 399 von dem Verbindungspunkt zwischen dem ersten Stromrichter 321 und dem zweiten Stromrichter 324 getrennt werden; mittels des Schalters S18 kann die Impedanzeinheit 399 überbrückt werden. Für die Leistungsübertragung ist es ausreichend, wenn eine der beiden Stromrichtereinheiten 303 und 306 mit einer Impedanzeinheit ausgestattet ist.

Bei Auftreten eines unsymmetrischen Fehlers beginnt ein Fehlerstrom I zum Erdpotential 342 zu fließen, welcher sich durch die Impedanzeinheit 339 zum Verbindungspunkt 336 durch die Freilaufpfade (Freilaufdioden) des Stromrichters 315 schließt. Durch die Impedanzeinheit 339, insbesondere durch das Widerstands-Bauelement 355, wird der Fehlerstrom I gedämpft und an der Impedanzeinheit 339 wird eine Spannung aufgebaut. Dadurch wird erreicht, dass der die Primärwicklung 373 des ersten Transformators 370 durchfließende Wechselstrom Nulldurchgänge aufweist. Daraufhin kann dieser Wechselstrom mittels des ersten Wechselstrom-Leistungsschalters S7 abgeschaltet werden.

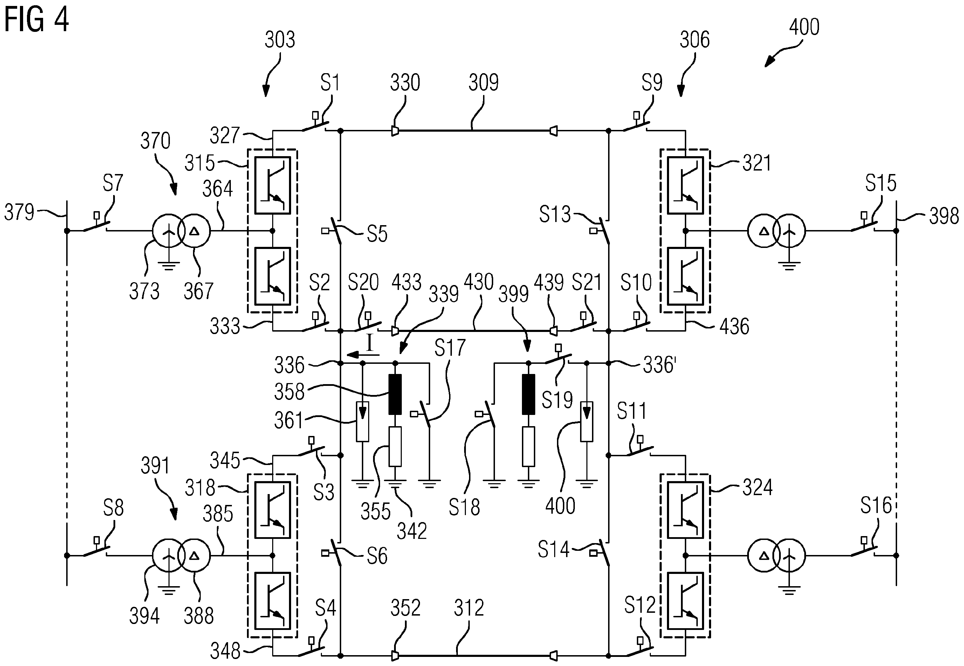

In Figur 4 ist eine weitere HGÜ-Anlage 400 dargestellt. Diese weitere HGÜ-Anlage 400 unterscheidet sich von der in Figur 3 dargestellten HGÜ-Anlage 300 lediglich dadurch, dass die erste Stromrichtereinheit 303 zusätzlich mittels eines dritten HGÜ-Leiters 430 mit der zweiten Stromrichtereinheit 306 elektrisch verbunden ist. Dabei ist der zweite Gleichspannungsanschluss 333 des ersten Stromrichters 315 (und damit auch der erste Verbindungspunkt 336) über den Schalter S20 (schaltbar) elektrisch mit einem dritten Leiteranschlusspunkt 433 für den dritten HGÜ-Leiter 430 verbunden. In gleicher Art und Weise ist der zweite Gleichspannungsanschluss 436 des ersten Stromrichters 321 über den Schalter S21 (schaltbar) mit einem weiteren Leiteranschlusspunkt 439 für den dritten HGÜ-Leiter 430 elektrisch verbunden. Diese weitere HGÜ-Anlage 400 hat gegenüber der in Figur 3 dargestellten HGÜ-Anlage 300 den Vorteil, dass auch bei Ausfall des ersten HGÜ-Leiters 309 oder des zweiten HGÜ-Leiters 312 die HGÜ-Anlage 400 mittels des dritten HGÜ-Leiters 430 (ohne Unterbrechung) einpolig weiterbetrieben werden kann.

Es wurde eine Stromrichtereinheit und ein Verfahren beschrieben, bei denen mittels einer Impedanzeinheit Nulldurchgänge des Wechselstromes an den primärseitigen Wechselspannungsanschlüssen des Transformators sichergestellt sind, auch wenn ein (stromrichterinterner) unsymmetrischer Fehler vorliegt. Mittels der Impedanzeinheit wird eine elektrische Impedanz in den Erdungspfad der Stromrichtereinheit eingebracht. Dabei ist besonders vorteilhaft, dass mittels der Impedanzeinheit unsymmetrische Fehler geklärt werden können, ohne dass Kurzschließer-Schalter an einer Primärseite, Sekundärseite oder Tertiärseite des Transformators notwendig sind. Im Vergleich zu einem primärseitigen oder sekundärseitigen Kurzschließer-Schalter ist besonders vorteilhaft, dass keine zusätzliche Belastung des Wechselspannungsnetzes (Wechselspannungssystems) auftritt. Weiterhin kann vorteilhafterweise ein üblicher Wechselstrom-Leistungsschalter eingesetzt werden, da Nulldurchgänge des (durch den Wechselstrom-Leistungsschalter fließende) Stroms sichergestellt sind. Es ist keine neuartige Ansteuerung des Wechselstrom-Leistungsschalters notwendig (herkömmliche Control- und Protection-Software kann eingesetzt werden) und es ist auch sonst keine neuartige Koordination des Wechselstrom-Leistungsschalters notwendig.

Gegenüber einem tertiärseitigen Kurzschließer ergeben sich folgende Vorteile:
- es ist ein kostengünstiges Transformatordesign möglich (es ist keine hochbelastbare Tertiärwicklung notwendig)
- es besteht keine Abhängigkeit von Netzparametern
- es sind keine neuartigen Anpassungen der Control- und Protection-Software notwendig, weil ein üblicher Wechselstrom-Leistungsschalter eingesetzt werden kann.

Vorteilhafterweise wird mittels der Impedanzeinheit eine passive Fehlerklärung ermöglicht. Das heißt, es müssen keine Komponenten (zum Beispiel Kurzschließer-Schalter) geschlossen bzw. geöffnet werden. Dies ermöglicht eine einfache und kostengünstige Art der Fehlerklärung. Weiterhin ist die offenbarte Lösung mit der Impedanzeinheit verlustneutral, weil die Impedanzeinheit außerhalb des Hauptstrompfades der Stromrichtereinheit installiert ist. Mit anderen Worten gesagt, fließt im Allgemeinen nur bei Auftreten eines Fehlers ein Strom durch die Impedanzeinheit.

Vorteilhafterweise ist also insbesondere die Fehlerklärung von stromrichterinternen (konverterinternen) unsymmetrischen Fehlern (zum Beispiel von einpolig zu Erde auftretenden Fehlern) ohne den Einsatz von Kurzschließern möglich. Durch die Impedanzeinheit im Erdungspfad wird der Fehlerstrom I (der von der Sekundärseite des Transformators zum Erdpotential durch die Impedanzeinheit fließt) gedämpft. Durch den Fehlerstrom I wird über der Impedanzeinheit 339 eine Gegenspannung aufgebaut. Dadurch kommt es zu natürlichen Strom-Nulldurchgängen des Wechselstroms auf der Primärseite des Transformators und damit im Wechselstrom-Leistungsschalter.

Die beschriebene Lösung kann besonders vorteilhaft bei bipolaren Voltage-Source-Convertern basierend auf Halbbrückentechnologie angewendet werden.

## Patentansprüche

1. Verfahren zur Fehlerbehandlung bei einer Stromrichtereinheit (303) für eine Hochspannungsgleichstromübertragung
- wobei die Stromrichtereinheit (303) einen ersten Stromrichter (315) aufweist,
- wobei ein erster Gleichspannungsanschluss (327) des ersten Stromrichters (315) mit einem ersten Leiteranschlusspunkt (330) für einen ersten Hochspannungsgleichstromübertragungs
- Leiter (309) verbunden ist,
- wobei ein zweiter Gleichspannungsanschluss (333) des ersten Stromrichters (315) unter Ausbildung eines Verbindungspunktes (336) mit einer eine elektrische Impedanz aufweisenden Impedanzeinheit (339) verbunden ist,
- wobei die Impedanzeinheit (339) den Verbindungspunkt (336) mit Erdpotential (342) verbindet,
- wobei die Impedanzeinheit (339) ein ohmsches Widerstands-Bauelement (355) aufweist, das in Reihe mit einem Induktivitäts
- Bauelement (358) geschaltet ist, wobei das Widerstands-Bauelement (355) einen ohmschen Widerstand zwischen 5 Ohm und 5000 Ohm aufweist, und
- wobei ein Wechselspannungsanschluss (364) des ersten Stromrichters (315) mit einer Sekundärwicklung (367) eines ersten Transformators (370) verbunden ist, und eine Primärwicklung (373) des ersten Transformators (370) mit einem ersten Wechselstrom-Leistungsschalter (S7) verbunden ist, wobei bei dem Verfahren
- auf einen einpoligen oder zweipoligen Fehler am dreipoligen Wechselspannungsanschluss (364) des ersten Stromrichters (315) hin ein Fehlerstrom (I) vom Erdpotential (342) durch die Impedanzeinheit (339) zum Verbindungspunkt (336) zu fließen beginnt,
- aufgrund der Impedanz der Impedanzeinheit (339) der Fehlerstrom (I) gedämpft wird und an der Impedanzeinheit (339) eine Spannung aufgebaut wird, wodurch ein die Primärwicklung (373) des ersten Transformators (370) durchfließender Wechselstrom Nulldurchgänge aufweist, so dass dieser Wechselstrom mittels des ersten Wechselstrom-Leistungsschalters (S7) abschaltbar ist, und
- daraufhin der Wechselstrom mittels des ersten Wechselstrom-Leistungsschalters (S7) abgeschaltet wird.

2. Verfahren nach Anspruch 1,
- wobei der zweite Gleichspannungsanschluss (333) des ersten Stromrichters (315) mit einem ersten Gleichspannungsanschluss (345) eines zweiten Stromrichters (318) elektrisch verbunden ist,
- wobei ein zweiter Gleichspannungsanschluss (348) des zweiten Stromrichters (318) mit einem zweiten Leiteranschlusspunkt (352) für einen zweiten Hochspannungsgleichstromübertragungs-Leiter (312) verbunden ist
- wobei ein Wechselspannungsanschluss (385) des zweiten Stromrichters (318) mit einer Sekundärwicklung (388) eines zweiten Transformators (391) verbunden ist, und eine Primärwicklung (394) des zweiten Transformators (391) mit einem zweiten Wechselstrom-Leistungsschalter (S8) verbunden ist, wobei bei dem Verfahren
- auf einen einpoligen oder zweipoligen Fehler am dreipoligen Wechselspannungsanschluss (364) des ersten Stromrichters (315) oder am dreipoligen Wechselspannungsanschluss (385) des zweiten Stromrichters (318) hin der Fehlerstrom (I) vom Erdpotential (342) durch die Impedanzeinheit (339) zum Verbindungspunkt (336) zu fließen beginnt,
- aufgrund der Impedanz der Impedanzeinheit (339) der Fehlerstrom (I) gedämpft wird und an der Impedanzeinheit (339) eine Spannung aufgebaut wird, wodurch ein die Primärwicklung (373) des ersten Transformators (370) oder die Primärwicklung (394) des zweiten Transformators (391) durchfließender Wechselstrom Nulldurchgänge aufweist, so dass dieser Wechselstrom mittels des ersten Wechselstrom-Leistungsschalters (S7) oder mittels des zweiten Wechselstrom-Leistungsschalters (S8) abschaltbar ist, und
- daraufhin dieser Wechselstrom mittels des ersten Wechselstrom-Leistungsschalters (S7) oder mittels des zweiten Wechselstrom-Leistungsschalters (S8) abgeschaltet wird.

3. Stromrichtereinheit (303) für eine Hochspannungsgleichstromübertragung
- mit einem ersten Transformator (370) und einem zweiten Transformator (391),
- mit einer eine elektrische Impedanz aufweisenden Impedanzeinheit (339), und
- mit einem ersten Stromrichter (315) und mit einem zweiten Stromrichter (318),
- wobei ein erster Gleichspannungsanschluss (327) des ersten Stromrichters (315) mit einem ersten Leiteranschlusspunkt (330) für einen ersten Hochspannungsgleichstromübertragungs-Leiter (309) verbindbar ist,
- wobei ein zweiter Gleichspannungsanschluss (333) des ersten Stromrichters (315) unter Ausbildung eines Verbindungspunktes (336) mit der Impedanzeinheit (339) verbunden ist,
- die Impedanzeinheit (339) den Verbindungspunkt (336) mit Erdpotential (342) verbindet, und
- der zweite Gleichspannungsanschluss (333) des ersten Stromrichters (315) mit einem ersten Gleichspannungsanschluss (345) des zweiten Stromrichters (318) elektrisch verbunden ist,
- wobei ein zweiter Gleichspannungsanschluss (348) des zweiten Stromrichters (318) mit einem zweiten Leiteranschlusspunkt (352) für einen zweiten Hochspannungsgleichstromübertragungs-Leiter (312) verbindbar ist,
- die Impedanzeinheit (339) ein ohmsches Widerstands-Bauelement (355) und ein Induktivitäts-Bauelement (358) aufweist, und
- das ohmsche Widerstands-Bauelement (355) in Reihe mit dem Induktivitäts-Bauelement (358) geschaltet ist,
- wobei ein Wechselspannungsanschluss (364) des ersten Stromrichters (315) mit einer Sekundärwicklung (367) des ersten Transformators (370) verbunden ist, und
- wobei ein Wechselspannungsanschluss (385) des zweiten Stromrichters (318) mit einer Sekundärwicklung (388) des zweiten Transformators (391) verbunden ist,
**dadurch gekennzeichnet, dass**
- die Stromrichtereinheit einen ersten Wechselstrom-Leistungsschalter (S7) und einen zweiten Wechselstrom-Leistungsschalter (S8) aufweist,
- eine Primärwicklung (373) des ersten Transformators (370) mit dem ersten Wechselstrom-Leistungsschalter (S7) verbunden ist,
- eine Primärwicklung (394) des zweiten Transformators (391) mit dem zweiten Wechselstrom-Leistungsschalter (S8) verbunden ist,
- das Widerstands-Bauelement (355) einen ohmschen Widerstand zwischen 5 Ohm und 5000 Ohm aufweist, und
- die Stromrichtereinheit (303) eingerichtet ist zum Ausführen des Verfahrens nach Anspruch 1 oder 2.

4. Stromrichtereinheit nach Anspruch 3, die einen Überspannungsleiter (361) aufweist, wobei
- der Verbindungspunkt (336) zusätzlich mittels des Überspannungsableiters (361) mit Erdpotential (342) verbunden ist.

5. Stromrichtereinheit nach Anspruch 4, wobei
- der Überspannungsableiter (361) parallel zu der Impedanzeinheit (339) geschaltet ist.

6. Stromrichtereinheit nach Ansprüchen 3 bis wobei
- der erste Stromrichter (315) und/oder der zweite Stromrichter (318) eine Reihenschaltung aus Modulen aufweisen (200), wobei die Module (200) jeweils mindestens zwei elektronische Schaltelemente (202, 206) und einen elektrischen Energiespeicher (210) aufweisen.

7. Stromrichtereinheit nach Ansprüchen 3 bis 6, wobei
- der erste Stromrichter (315) und/oder der zweite Stromrichter (318) ein modularer Multilevelstromrichter ist.

8. Hochspannungs-Gleichstrom-Übertragungsanlage (300) mit einer Stromrichtereinheit (303) nach einem der Ansprüche 3 bis 7.

## Claims

1. Method for handling a fault in a converter unit (303) for high-voltage DC transmission,
- wherein the converter unit (303) has a first converter (315),
- wherein a first DC voltage connection (327) of the first converter (315) is connected to a first conductor connection point (330) for a first high-voltage DC transmission conductor (309),
- wherein a second DC voltage connection (333) of the first converter (315) is connected to an impedance unit (339) having an electrical impedance, forming a connection point (336),
- wherein the impedance unit (339) connects the connection point (336) to earth potential (342),
- wherein the impedance unit (339) has an ohmic resistor component (355) which is connected in series with an inductor component (358), wherein the resistor component (355) has an ohmic resistance of between 5 Ohms and 5000 Ohms, and
- wherein an AC voltage connection (364) of the first converter (315) is connected to a secondary winding (367) of a first transformer (370), and a primary winding (373) of the first transformer (370) is connected to a first AC circuit breaker (S7), wherein in the method
- a fault current (I) begins to flow from the earth potential (342) through the impedance unit (339) to the connection point (336) in response to a single-pole or two-pole fault at the three-pole AC voltage connection (364) of the first converter (315),
- the fault current (I) is damped by virtue of the impedance of the impedance unit (339) and a voltage is built up at the impedance unit (339), as a result of which an AC current flowing through the primary winding (373) of the first transformer (370) has zero crossings such that this AC current is able to be switched off by means of the first AC circuit breaker (S7), and
- thereupon the AC current is switched off by means of the first AC circuit breaker (S7).

2. Method according to Claim 1,
- wherein the second DC voltage connection (333) of the first converter (315) is electrically connected to a first DC voltage connection (345) of a second converter (318),
- wherein a second DC voltage connection (348) of the second converter (318) is connected to a second conductor connection point (352) for a second high-voltage DC transmission conductor (312),
- wherein an AC voltage connection (385) of the second converter (318) is connected to a secondary winding (388) of a second transformer (391), and a primary winding (394) of the second transformer (391) is connected to a second AC circuit breaker (S8), wherein in the method
- the fault current (I) begins to flow from the earth potential (342) through the impedance unit (339) to the connection point (336) in response to a single-pole or two-pole fault at the three-pole AC voltage connection (364) of the first converter (315) or at the three-pole AC voltage connection (385) of the second converter (318),
- the fault current (I) is damped by virtue of the impedance of the impedance unit (339) and a voltage is built up at the impedance unit (339), as a result of which an AC current flowing through the primary winding (373) of the first transformer (370) or the primary winding (394) of the second transformer (391) has zero crossings such that this AC current is able to be switched off by means of the first AC circuit breaker (S7) or by means of the second AC circuit breaker (S8), and
- thereupon this AC current is switched off by means of the first AC circuit breaker (S7) or by means of the second AC circuit breaker (S8).

3. Converter unit (303) for high-voltage DC transmission
- comprising a first transformer (370) and a second transformer (391),
- comprising an impedance unit (339) having an electrical impedance, and
- comprising a first converter (315) and comprising a second converter (318),
- wherein a first DC voltage connection (327) of the first converter (315) is able to be connected to a first conductor connection point (330) for a first high-voltage DC transmission conductor (309),
- wherein a second DC voltage connection (333) of the first converter (315) is connected to the impedance unit (339), forming a connection point (336),
- the impedance unit (339) connects the connection point (336) to earth potential (342), and
- the second DC voltage connection (333) of the first converter (315) is electrically connected to a first DC voltage connection (345) of the second converter (318),
- wherein a second DC voltage connection (348) of the second converter (318) is able to be connected to a second conductor connection point (352) for a second high-voltage DC transmission conductor (312),
- the impedance unit (339) has an ohmic resistor component (355) and an inductor component (358), and
- the ohmic resistor component (355) is connected in series with the inductor component (358),
- wherein an AC voltage connection (364) of the first converter (315) is connected to a secondary winding (367) of the first transformer (370), and
- wherein an AC voltage connection (385) of the second converter (318) is connected to a secondary winding (388) of the second transformer (391),
**characterized in that**
- the converter unit has a first AC circuit breaker (S7) and a second AC circuit breaker (S8),
- a primary winding (373) of the first transformer (370) is connected to the first AC circuit breaker (S7),
- a primary winding (394) of the second transformer (391) is connected to the second AC circuit breaker (S8),
- the resistor component (355) has an ohmic resistance of between 5 Ohms and 5000 Ohms, and
- the converter unit (303) is configured to perform the method according to Claim 1 or 2.

4. Converter unit according to Claim 3 which has a surge arrester (361), wherein
- the connection point (336) is additionally connected to earth potential (342) by means of the surge arrester (361).

5. Converter unit according to Claim 4, wherein
- the surge arrester (361) is connected in parallel with the impedance unit (339).

6. Converter unit according to Claims 3 to 5, wherein
- the first converter (315) and/or the second converter (318) have/has a series connection comprising modules (200), wherein the modules (200) each have at least two electronic switching elements (202, 206) and an electrical energy store (210).

7. Converter unit according to Claims 3 to 6, wherein
- the first converter (315) and/or the second converter (318) are/is a modular multilevel converter.

8. High-voltage DC transmission system (300) comprising a converter unit (303) according to one of Claims 3 to 7.

## Revendications

1. Procédé de traitement d'un défaut dans une unité (303) de convertisseur pour un transport de courant continu à haute tension,
- dans lequel l'unité (303) de convertisseur a un premier convertisseur (315),
- dans lequel une première borne (327) de tension continue du premier convertisseur (315) est reliée à un premier point (330) de connexion de conducteur pour un premier conducteur (309) de transport de courant continu à haute tension,
- dans lequel une deuxième borne (333) de tension continue du premier convertisseur (315) est reliée, avec formation d'un point (336) de liaison, à une unité (339) d'impédance ayant une impédance électrique,
- dans lequel l'unité (339) d'impédance relie le point (336) de liaison au potentiel (342) de terre,
- dans lequel l'unité (339) d'impédance a un composant (355) de résistance ohmique, qui est monté en série avec un composant (358) d'inductance, dans lequel le composant (355) de résistance a une résistance comprise entre 5 Ohm et 5000 Ohm, et
- dans lequel une borne (364) de tension alternative du premier convertisseur (315) est reliée à un enroulement (367) secondaire d'un premier transformateur (370), et un enroulement (373) primaire du premier transformateur (370) est relié à un premier interrupteur (S7) de puissance du courant alternatif,
dans lequel, dans le procédé
- sur un défaut unipolaire ou bipolaire à la borne (364) tripolaire de tension alternative du premier convertisseur (315), un courant (I) de défaut commence à passer dans l'unité (339) d'impédance du potentiel (342) de terre au point (336) de liaison,
- en raison de l'impédance de l'unité (339) d'impédance, on amortit le courant (I) de défaut et on établit, sur l'unité (339) d'impédance, une tension, grâce à quoi un courant alternatif passant dans l'enroulement (373) primaire du premier transformateur (370) a des passages par zéro, de sorte que ce courant alternatif peut être interrompu, au moyen du premier interrupteur (S7) de puissance de courant alternatif, et
- on interrompt ensuite le courant alternatif, au moyen du premier interrupteur (S7) de puissance de courant alternatif.

2. Procédé suivant la revendication 1,
- dans lequel la deuxième borne (333) de courant continu du premier convertisseur (315) est reliée électriquement à une première borne (345) de tension continue d'un deuxième convertisseur (318),
- dans lequel une deuxième borne (348) de tension continue du deuxième convertisseur (318) est reliée à un deuxième point (352) de connexion d'un conducteur pour un deuxième conducteur (312) de transport de courant continu à haute tension,
- dans lequel une borne (385) de tension alternative du deuxième convertisseur (318) est reliée à un enroulement (388) secondaire d'un deuxième transformateur (391), et un enroulement (394) primaire du deuxième transformateur (391) est relié à un deuxième interrupteur (S8) de puissance de courant alternatif,
dans lequel, dans le procédé
- sur un défaut monopolaire ou bipolaire à la borne (364) tripolaire de tension alternative du premier convertisseur (315) ou à la borne (385) tripolaire de la tension alternative du deuxième convertisseur (318), le courant (I) de défaut commence à passer dans l'unité (339) d'impédance du potentiel (342) de terre au point (336) de liaison,
- en raison de l'impédance de l'unité (339) d'impédance, on amortit le courant (I) de défaut et on établit, sur l'unité (339) d'impédance, une tension, grâce à quoi un courant alternatif, passant dans l'enroulement (373) primaire du premier transformateur (370) ou dans l'enroulement (394) primaire du deuxième transformateur (391), a des passages par zéro, de sorte que ce courant alternatif peut être interrompu au moyen du premier interrupteur (S7) de puissance de courant alternatif ou au moyen du deuxième interrupteur (S8) de puissance de courant alternatif, et
- on interrompt ensuite ce courant alternatif au moyen du premier interrupteur (S7) de puissance de courant alternatif ou au moyen du deuxième interrupteur (S8) de puissance de courant alternatif.

3. Unité (303) à convertisseur pour un transport de courant continu à haute tension,
- comprenant un premier transformateur (370) et un deuxième transformateur (391),
- comprenant une unité (339) d'impédance ayant une impédance électrique, et
- comprenant un premier convertisseur (315) et comprenant un deuxième convertisseur (318),
- dans laquelle une première borne (327) de tension continue du premier convertisseur (315) peut être reliée à un premier point (330) de connexion d'un conducteur pour un premier conducteur (309) de transport de courant continu à haute tension,
- dans laquelle une deuxième borne (333) de tension continue du premier convertisseur (315) est reliée à l'unité (339) d'impédance avec formation d'un point (336) de liaison,
- l'unité (339) d'impédance relie le point (336) de liaison au potentiel (342) de terre, et
- la deuxième borne (333) de tension continue du premier convertisseur (315) est reliée électriquement à une première borne (345) de tension continue du deuxième convertisseur (318),
- dans laquelle une deuxième borne (348) de tension continue du deuxième convertisseur (318) peut être reliée à un deuxième point (352) de connexion conducteur pour un deuxième conducteur (312) de transport de courant continu à haute tension,
- l'unité (339) d'impédance a un composant (355) de résistance ohmique et un composant (358) d'inductance, et
- le composant (355) de résistance ohmique est monté en série avec le composant (358) d'inductance,
- dans laquelle une borne (364) de tension alternative du premier convertisseur (315) est reliée à un enroulement (367) secondaire du premier transformateur (370), et
- dans laquelle une borne (385) de tension alternative du deuxième convertisseur (318) est reliée à un enroulement (388) secondaire du deuxième transformateur (391),
**caractérisée en ce que**
- l'unité de convertisseur a un premier interrupteur (S7) de puissance de courant alternatif et un deuxième interrupteur (S8) de puissance de courant alternatif,
- un enroulement (373) primaire du premier transformateur (370) est relié au premier interrupteur (S7) de puissance de courant alternatif,
- un enroulement (394) primaire du deuxième transformateur (391) est relié au deuxième interrupteur (S8) de puissance de courant alternatif,
- le composant (355) de résistance a une résistance ohmique comprise entre 5 Ohm et 5000 Ohm, et
- l'unité (303) à convertisseur est conçue pour l'exécution du procédé suivant la revendication 1 ou 2.

4. Unité à convertisseur suivant la revendication 3,
qui a un parafoudre (361), dans laquelle
- le point (336) de liaison est relié au potentiel (342) de terre supplémentairement au moyen du parafoudre (361).

5. Unité à convertisseur suivant la revendication 4,
dans laquelle
- le parafoudre (361) est monté en parallèle avec l'unité (339) d'impédance.

6. Unité à convertisseur suivant les revendications 3 à 5,
dans laquelle
- le premier convertisseur (315) et/ou le convertisseur (318) ont (200) un circuit série composé de modules, dans lequel les modules (200) ont chacun au moins deux éléments (202, 206) électroniques de coupure et un accumulateur (210) d'énergie électrique.

7. Unité à convertisseur suivant les revendications 3 à 6,
dans laquelle
- le premier convertisseur (315) et/ou le deuxième convertisseur (318) est un convertisseur modulaire à plusieurs niveaux.

8. Installation (300) de transport de courant continu à haute tension comprenant une unité (303) à convertisseur suivant l'une des revendications 3 à 7.
